Europäisches Patentamt

European Patent Office

Office européen des brevets

(11) Numéro de publication : **0 433 161 B1**

## FASCICULE DE BREVET EUROPEEN

(45) Date de publication du fascicule du brevet :
**03.08.94 Bulletin 94/31**

(51) Int. Cl.$^5$ : **G01S 1/02,** G01S 1/56

(21) Numéro de dépôt : **90403524.3**

(22) Date de dépôt : **11.12.90**

(54) **Système d'aide à l'atterrissage du type MLS, comportant des moyens de génération hyperfréquences centralisés.**

(30) Priorité : **15.12.89 FR 8916616**

(43) Date de publication de la demande :
**19.06.91 Bulletin 91/25**

(45) Mention de la délivrance du brevet :
**03.08.94 Bulletin 94/31**

(84) Etats contractants désignés :
**CH DE GB IT LI**

(56) Documents cités :
**US-A- 3 820 074**
**US-A- 4 814 773**
**NEC RESEARCH & DEVELOPMENT, vol. 59, octobre 1980, pages 34-45, Tokyo, JP; G. ONODERA et al.: "Development of approach elevation equipment in MLS"**
**G.E.C. JOURNAL OF RESEARCH, vol. 2, no. 2, 1984, pages 66-75, London, GB; J.R.WALLINGTON et al.: "Optical tecniques for signal distribution in phased arrays"**

(56) Documents cités :
**NAVIGATION, vol. 29, no. 114, avril 1981, pages 174-187, Paris, FR; B.LETOQUART et al.: "Le MLS, un exemple d'utilisation du microprocesseur"**
**IEEE COMPUTER SOCIETY INTERNATIONAL CONFERENCE, Washington, DC, 7-10 septembre1976, no. 13, pages 264-268, New York, US; J.M. HUGHES: "Multimicroprocessor navigation systems"**

(73) Titulaire : **THOMSON-CSF**
**173, Boulevard Haussmann**
**F-75008 Paris (FR)**

(72) Inventeur : **Grousseau, Alain**
**Thomson-CSF,**
**SCPI,**
**Cedex 67**
**F-92045 Paris La Defense (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

Jouve, 18, rue Saint-Denis, 75001 PARIS

## Description

La présente invention se rapporte au domaine des systèmes d'aide à l'atterrissage du type MLS. Elle a plus particulièrement pour objet la génération centralisée des signaux hyperfréquences que les différentes stations d'un système MLS doivent émettre.

On rappelle que le système MLS (initiales de l'expression anglo-saxonne "Microwave Landing System") est un système permettant de guider un avion à l'atterrissage en lui fournissant différentes informations, appelées "fonctions" : des informations angulaires, telles que son angle d'azimut par rapport à l'axe de la piste, son angle de site par rapport à l'horizontale, éventuellement d'autres informations annexes telles que azimut arrière par exemple, et un certain nombre de données, les unes dites "de base" et les autres dites "auxiliaires". Ces différentes informations sont émises en permanence à partir du sol en multiplexage temporel sur une même fréquence, selon des caractéristiques normalisées par l'OACI (Organisation de l'Aviation Civile Internationale), annexe 10 paragraphe III.11. La définition par l'OACI d'un système MLS inclut encore un équipement de mesure de distance, connu sous les initiales DME (de l'expression anglo-saxonne "Distance Measuring Equipment"). Ces informations sont décodées par chaque avion intéressé. Un tel système est décrit par exemple dans le document G. ONODERA et al, NEC research and development, vol.59, october 1980, pages 34 - 45.

Chacune des fonctions précédentes se décompose en deux parties, émises successivement :

- un préambule, dont le rôle est de fournir à l'avion une identification de la fonction qui va suivre ; ce préambule est émis par une antenne dite sectorielle, c'est à dire une antenne fixe émettant dans l'ensemble de la zone, ou secteur, que le système MLS doit couvrir ; selon la norme OACI, le préambule se présente sous la forme d'un mot de douze bits permettant l'identification de façon bi-univoque de chacune des fonctions ; ce mot binaire est émis en modulation de phase de type DPSK (pour "Differential Phase Shift Keying" ou codage de phase différentiel) ;
- la fonction proprement dite : dans le cas où cette fonction est une donnée, elle est émise par l'antenne sectorielle également en modulation de phase DPSK ; dans le cas où cette fonction est une information angulaire, elle est constituée par deux impulsions émises à l'aide d'une antenne à balayage électronique, selon le principe dit du faisceau battant à référence temporelle, qui est notamment décrit dans la demande de brevet français n° 2.549.321 au nom de THOMSON-CSF.

Un système MLS comporte donc au moins autant de stations que de fonctions angulaires à émettre.

Il apparaît ainsi que les différentes informations nécessaires pour le guidage d'un avion sont émises par des stations distinctes, successivement sur une même fréquence. Il est clair que l'ordre et la durée des émissions doivent être respectés rigoureusement pour que soit assurée la sécurité nécessaire au guidage, surtout lors de l'atterrissage dont on sait qu'il s'agit d'une phase particulièrement délicate. En particulier, tout recouvrement des émissions doit être soigneusement évité. Pour garantir cette sécurité, de nombreux dispositifs ou solutions sont connus et qui prévoient :

- une grande redondance des matériels ;
- des liaisons de synchronisation entre les stations, de préférence redondantes elles aussi ;
- de nombreuses boucles de surveillance du déroulement des émissions.

Ces différentes solutions tendent à multiplier et compliquer les matériels et les circuits ; elles ont notamment le défaut de diminuer la fiabilité de l'ensemble.

La présente invention se propose d'augmenter la sécurité d'un système MLS sans en diminuer la fiabilité.

A cet effet, selon l'invention, on engendre les signaux hyperfréquences à émettre de façon centralisée et séquentielle puis on les distribue aux différentes stations MLS à l'aide d'un réseau de fibres optiques, les stations assurant seulement alors l'amplification et l'émission.

Plus précisément, l'invention a pour objet un système d'aide à l'atterrissage tel que défini par la revendication 1.

De la sorte, la génération des signaux étant centralisée et séquentielle, le multiplexage temporel est automatiquement assuré sans matériel supplémentaire. Au contraire, il apparaît que le nombre d'équipements en est réduit, augmentant ainsi la fiabilité du système et diminuant son coût.

D'autres objets, particularités et résultats de l'invention ressortiront de la description suivante, donnée à titre d'exemple non limitatif et illustrée par les dessins annexés, qui représentent :

- la figure 1, un schéma d'implantation d'un système MLS de type connu ;
- la figure 2, un schéma synoptique d'une station MLS de type connu ;
- les figures 3a et 3b, un premier mode de réalisation selon l'invention d'une station centrale de génération de signaux et d'une station MLS qui lui est adaptée ;
- les figures 4a et 4b, un deuxième mode de réalisation selon l'invention d'une station centrale de génération de signaux et d'une station MLS qui lui est adaptée ;
- les figures 5a et 5b, un troisième mode de réalisation selon l'invention d'une station centrale de génération de signaux et d'une station MLS qui lui est adaptée.

Sur ces différentes figures, les mêmes références se rapportent à des éléments analogues.

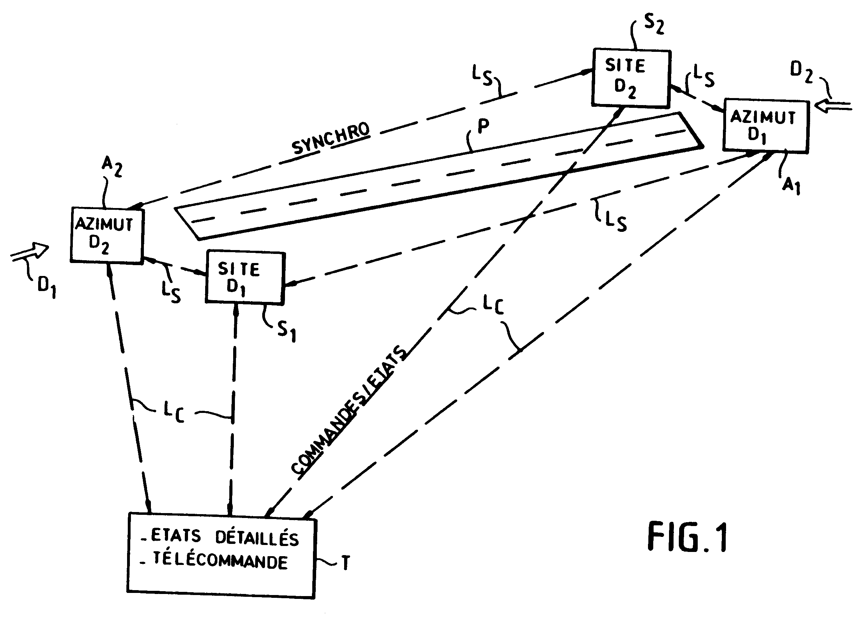

La figure 1 est donc le schéma d'une implantation classique d'un système MLS.

Ce système se compose d'un ensemble de stations MLS disposées autour d'une piste d'atterrissage, repérée P, qui fait habituellement plusieurs kilomètres. Pour un sens donné d'utilisation de la piste P, par exemple le sens $D_1$, l'information d'angle d'azimut est donnée par une première station $A_1$, disposée dans l'axe de la piste et à l'autre extrémité de celle-ci par rapport au point d'atterrissage (ou entrée de piste). L'information d'angle de site est donnée par une seconde station, repérée $S_1$, et disposée près de l'entrée de piste, de préférence latéralement. Dans le cas où on veut disposer d'une information d'azimut arrière, le système comporte une troisième station, repérée $A_2$, et disposée dans l'axe de la piste côté entrée de piste. Lorsque la piste peut être utilisée dans l'autre sens (flèche $D_2$), le système comprend un second ensemble de deux stations, azimut et site respectivement ; la station azimut pour le sens $D_2$ peut être la même station $A_2$ que celle qui fournit l'information d'azimut arrière pour le sens $D_1$ ; l'information de site pour le sens $D_2$ sera donnée par une quatrième station, repérée $S_2$, disposée au voisinage de l'entrée de piste dans le sens $D_2$, de la même manière que la station $S_1$. En outre, un équipement de mesure de distance DME est nécessaire pour chaque sens de piste ; il est en général disposé dans la station azimut ($A_1$ et $A_2$), sans que cela soit nécessaire. Un tel équipement DME est par exemple décrit dans la demande de brevet français n° 2.576.111 au nom de THOMSON-CSF.

Afin d'éviter le recouvrement des émissions de ces différentes stations, toutes les stations susceptibles de travailler pour un sens de piste donné sont reliées entre elles par des liaisons de synchronisation, représentées sur la figure en pointillés et repérées $L_s$.

En outre, ces différentes stations sont reliées à une salle technique T par des liaisons $L_c$ repérées en pointillés et permettant à un opérateur de télécommander le fonctionnement des stations et d'en recevoir les compte-rendus (états détaillés).

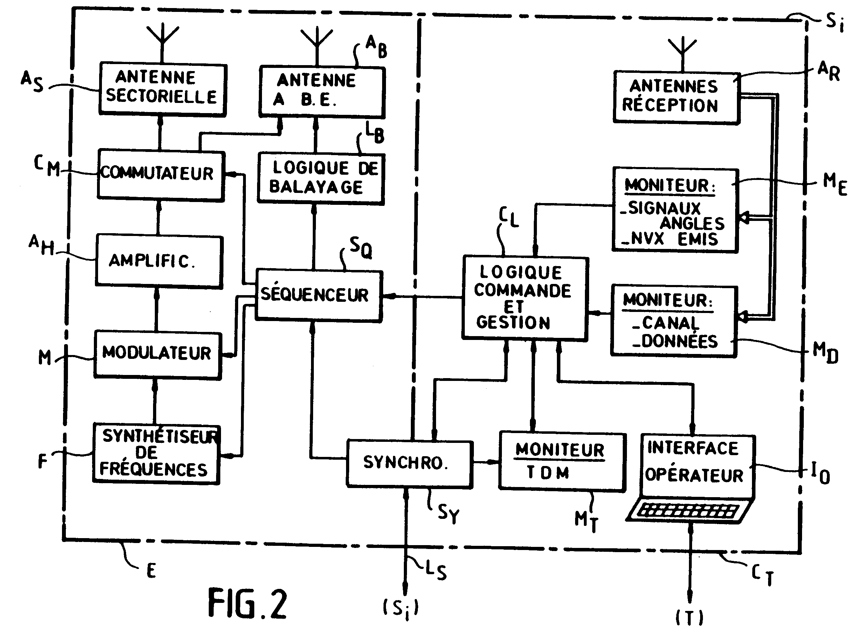

La figure 2 est un schéma synoptique d'une station MLS de type connu.

Une telle station est chargée d'émettre l'une des fonctions MLS (azimut, site, azimut arrière...) ; elle est repérée $S_i$ et représente l'une des stations MLS de la figure 1 ($S_1$, $S_2$, $A_1$ ou $A_2$).

Cette station $S_i$ comporte essentiellement deux parties, une partie située à gauche de la figure et repérée E, comportant les moyens d'émission de la station, et une partie située à droite et repérée $C_T$, comportant les moyens de contrôle du fonctionnement de la station.

La partie émetteur E comporte, en cascade :
- un synthétiseur de fréquences F, fournissant un signal sinusoïdal destiné à former une onde porteuse, dont la fréquence est voisine de 5 GHz selon la norme OACI (on rappelle que, selon cette norme, une fréquence, ou canal, parmi 200 fréquences prédéfinies, voisines de 5 GHz, est affectée à chaque système MLS) ;
- un modulateur M du signal fourni par synthétiseur F, qui réalise une modulation de phase DPSK à deux états, permettant d'émettre le préambule et les données ;
- un amplificateur hyperfréquence $A_H$, réalisé à l'aide de tubes ou de transistors selon la puissance requise ; celle-ci est classiquement de l'ordre de 20 Watts et donc, le plus souvent, l'amplificateur est réalisé à l'aide de transistors ;
- un commutateur $C_M$, relié à la fois à une antenne sectorielle $A_s$, à une antenne à balayage électronique $A_B$ et, éventuellement, à des antennes (non représentées) dites OCI (pour Out of Coverage Indicator ou indicateur de situation hors couverture), ayant pour fonction d'indiquer à l'avion que, étant en dehors de la couverture du système MLS, il ne doit pas prendre en compte les signaux qu'il reçoit ; le commutateur $C_M$ est chargé de commuter le signal produit par la chaîne précédente vers l'une des antennes.

Les moyens d'émission E comportent encore un séquenceur $S_Q$, assurant la commande des éléments F, M, $A_H$ et $C_M$, ainsi que celle de l'antenne à balayage électronique $A_B$ par l'intermédiaire d'un circuit logique de balayage $L_B$.

De la sorte et sous la commande du séquenceur $S_Q$, les moyens d'émission F à $A_H$ fournissent un signal, par l'intermédiaire du commutateur $C_M$, soit à l'antenne sectorielle $A_s$ pour l'émission du préambule et des données, soit à l'antenne à balayage électronique $A_B$ pour l'émission de l'information angulaire, soit aux antennes OCI pour les indications de situation hors couverture.

La partie contrôle $C_T$ de la station MLS comporte :
- un ensemble d'antennes de réception $A_R$, ou capteurs, pour recevoir le signal tel qu'émis par la station $S_i$ ; cet ensemble peut comporter un capteur externe, par exemple du type cornet, analogue au récepteur porté par les avions guidés, placé à quelques dizaines de mètres des antennes ; il peut comporter également un dispositif de prélèvement du signal situé au niveau de chacune des antennes elles-mêmes, connu sous le nom de moniteur intégral ;
- un ensemble de trois moniteurs : $M_E$, $M_D$ et $M_T$, ayant chacun pour fonction d'effectuer des tests prédéfinis sur les informations qu'ils reçoivent des antennes de réception $A_R$, c'est-à-dire d'effectuer des mesures sur ces informations et de les comparer à des valeurs de référence qu'ils ont en mémoire ; lorsque les différences entre les résultats des mesures et les valeurs de référence excèdent des limites prédéfinies, les moniteurs, chacun pour les données qui les concernent, fournissent un signal d'alarme ; le moniteur $M_E$ est chargé de la surveillance des niveaux des signaux émis par les antennes et de la position des impulsions correspondants aux informations angulaires ; le moniteur $M_D$ est chargé de surveiller la fréquence d'émission qui doit, on le rappelle, correspondre à un canal MLS prédéterminé, ainsi que les préambules et les données émis par l'antenne sectorielle ; le moniteur $M_T$, dit moniteur TDM, est chargé de surveiller le multiplexage dans le temps des différentes informations MLS ;

- les circuits logiques $C_L$ de commande et de gestion, en général constitués par un microprocesseur, recevant les signaux des différents moniteurs et commandant en conséquence l'arrêt-marche de la station par l'intermédiaire d'un ou plusieurs parmi les éléments F, M, $A_H$, $C_M$ et $S_Q$.

La partie contrôle comporte encore des moyens d'interface $I_0$ avec un opérateur, reliés aux circuits logiques de commande $C_L$ et susceptibles d'échanger ordres télécommandés et compte-rendus avec la salle technique T (figure 1).

La station décrite ici est composée d'une chaîne d'émission unique. Pour des raisons de disponibilité, de sécurité ou de fiabilité, elle peut bien entendu être doublée. Ceci conduit à la création d'une deuxième chaîne E et à la modification corrélative des moyens assurant les fonctions de contrôle, de commande et de gestion.

La station $S_i$ comporte encore un circuit $S_y$ d'émission et de réception des informations de synchronisation véhiculées par les liaisons $L_S$ et en provenance des autres stations $S_i$ du système MLS. Afin d'assurer la synchronisation entre les stations $S_i$, une des solutions possibles est que chacune des stations envoie à la station qui la suit dans l'ordre des émissions une (ou plusieurs) impulsion de synchronisation, sur commande de l'unité logique $C_L$ et via le circuit $S_y$ et la liaison $L_s$ ; la réception de cette impulsion par le circuit $S_y$ de la station concernée, éventuellement après un retard prédéfini, déclenche l'émission par l'intermédiaire du séquenceur $S_Q$ ; elle peut déclencher également l'envoi d'un accusé de réception vers la station ayant émis l'impulsion de synchronisation. Plus généralement, la synchronisation a pour but d'assurer le séquencement des émissions selon les normes OACI, à l'aide d'échanges d'ordres et de compte-rendus sur le réseau de liaisons $L_s$. Par ailleurs, le moniteur $M_T$ assure la surveillance du multiplexage sur la base des informations qu'il reçoit du circuit $S_y$ et de sa propre station.

Il apparaît ainsi que le non-recouvrement des différentes émissions MLS repose entièrement sur la réception d'impulsions de synchronisation, avec le risque inhérent à ce type de procédé.

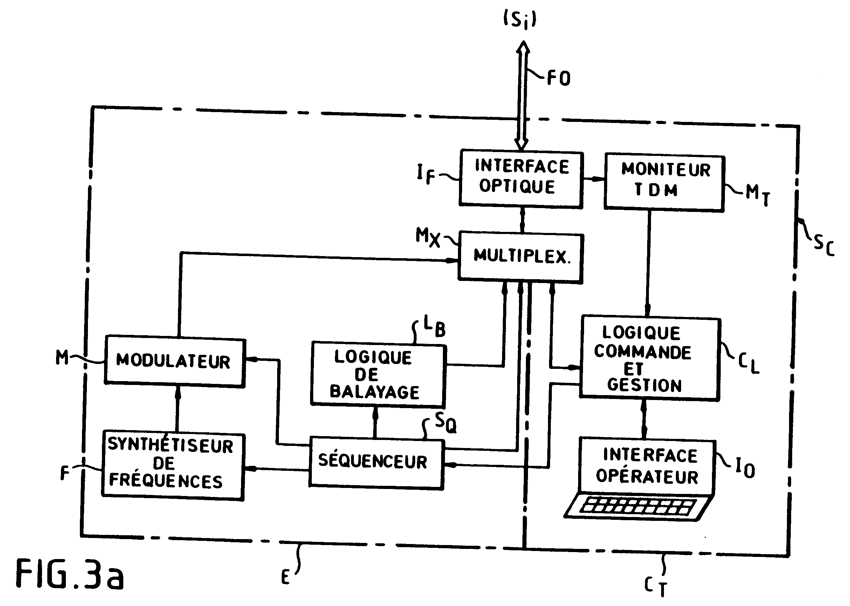

La figure 3a représente un premier mode de réalisation d'une station centrale de génération de signaux MLS selon l'invention.

La station centrale, repérée $S_c$, comporte, dans une partie émission E, un synthétiseur de fréquence F et un modulateur de phase M analogues à ceux des stations MLS classiques (figure 2), qui fournissent un signal hyperfréquence modulé, sous la commande d'un séquenceur $S_Q$ analogue à celui de la figure 2. Le signal est fourni à des moyens de multiplexage-démultiplexage $M_x$. La partie émission E comporte encore un circuit de logique de balayage $L_B$ analogue à celui de la figure 2, commandé par le séquenceur $S_Q$ et fournissant ses signaux de commande au multiplexeur $M_x$.

Les moyens $M_x$ réalisent le multiplexage des informations qui lui parviennent, sous toute forme et par tout moyen connus et les transmettent à un circuit d'interface optique $I_F$ qui transforme le signal reçu en un signal optique destiné à se propager sur un réseau de fibres optiques repéré FO, à destination des stations MLS $S_i$. Symétriquement, un signal optique reçu par la station $S_c$ est converti en signal électrique par l'interface $I_F$ et démultiplexé par les moyens $M_x$. Typiquement, l'interface $I_F$ comporte une diode laser assurant la conversion d'un signal électrique en un signal optique et une photo-diode, assurant la conversion du signal optique reçu en un signal électrique. Le réseau de fibres optiques FO peut être de tout type connu, par exemple en étoile, en anneau, ou encore formé par un ensemble de liaisons point à point. Dans un mode de réalisation préféré, le multiplexage est réalisé comme suit : le signal hyperfréquence modulé par le modulateur M vient moduler directement la fréquence de l'onde optique émise par la diode laser de l'interface $I_F$, et les autres informations à transmettre sur le réseau FO sont multiplexées et transmises par tout moyen dans la bande passante restante de la liaison optique.

La station centrale $S_c$ comporte également une partie contrôle $C_T$, qui inclut une interface opérateur $I_o$ relié à un organe logique central de commande et de gestion $C_L$ permettant, comme précédemment, de commander le séquenceur $S_Q$, ainsi que de dialoguer avec les stations $S_i$ via le multiplexeur $M_x$, l'interface $I_F$ et le réseau FO. Ce dernier reçoit également les signaux fournis par un moniteur TDM $M_T$ analogue à celui de la figure 2 ; ce moniteur reçoit de l'interface $I_F$ l'intégralité du signal émis par la partie émission E ; cela peut être réalisé soit à l'aide d'un coupleur optique prélevant le signal émis sur le réseau optique FO, soit à l'aide d'un coupleur hyperfréquence prélevant le signal avant sa conversion optique.

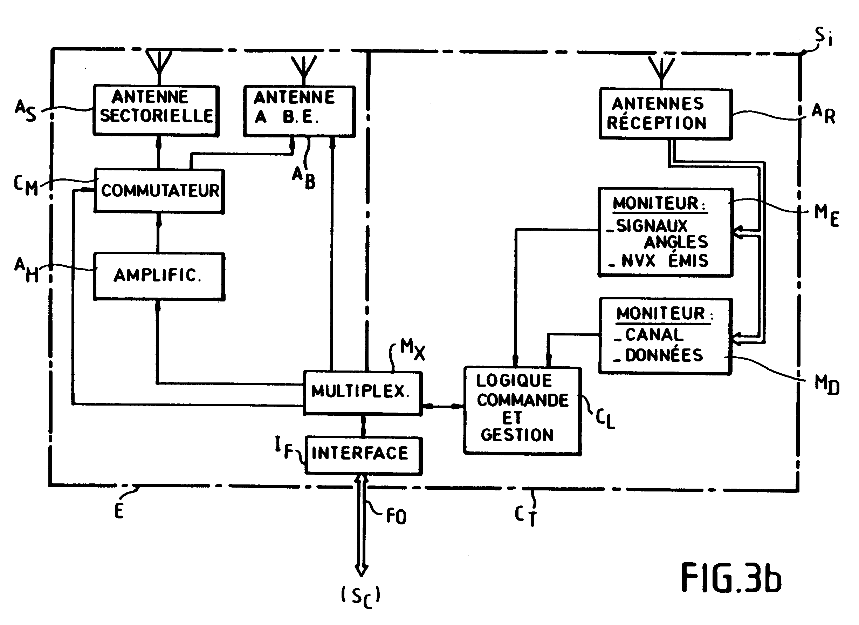

La figure 3b représente une station MLS $S_i$, adaptée pour recevoir le signal émis par la station centrale $S_c$ de la figure précédente.

La station $S_i$ comporte encore une partie E, regroupant les moyens d'émission de la station, et une partie $C_T$, regroupant ses moyens de contrôle.

La partie émission E ne comporte plus, par rapport au schéma de la figure 2, que l'amplificateur hyperfréquence $A_H$, le commutateur $C_M$, l'antenne sectorielle $A_S$, l'antenne à balayage électronique $A_B$ et les antennes OCI (non représentées).

La partie contrôle $C_T$ comporte, comme décrit figure 2, les antennes de réception $A_R$ et deux des moniteurs, à savoir $M_E$ et $M_D$, mais plus le moniteur $M_T$ qui est maintenant situé dans la station centrale $S_c$ ; les deux moniteurs fournissent leurs signaux au circuit logique de commande et de gestion $C_L$, qui fournit à son tour ses informations de bon ou mauvais fonctionnement à la station centrale $S_c$, via des moyens de multiplexage-démultiplexage $M_x$ et une interface optique $I_F$, analogues à ceux de la station centrale $S_c$, et le réseau de fibres optiques FO.

L'ensemble constitué par la station centrale $S_c$ (figure 3a) et les stations MLS $S_i$ (figure 3b) fonctionne de la façon suivante.

Sous la commande de son unité logique de commande $C_L$ et de son séquenceur $S_Q$, la station centrale $S_c$ engendre un signal à la fréquence MLS adéquate, convenablement modulé, représentant sous forme séquentielle le signal à émettre successivement par les différentes stations MLS. Il est à noter que les signaux destinés aux différentes stations sont, le cas échéant, convenablement retardés les uns par rapport aux autres pour tenir compte des différences de temps de propagation dans le réseau optique FO. A ce signal hyperfréquence se superposent comme on l'a vu ci-dessus des signaux de commande des commutateurs $C_M$ et des antennes à balayage électronique $A_B$ des stations MLS $S_i$, signaux engendrés par le séquenceur $S_Q$ et la logique de balayage $L_B$ de la station centrale $S_c$, et les signaux de commande et de contrôle émanant de l'unité $C_L$ de la station centrale.

Chacune des stations MLS $S_i$ n'a plus alors qu'à amplifier le signal qui la concerne et assurer l'émission des ondes.

Il apparaît qu'ainsi, tous les signaux étant engendrés séquentiellement en un même point, la synchronisation des différentes émissions est effectuée automatiquement, le moniteur TDM $M_T$ de la station centrale n'ayant plus qu'à vérifier le bon fonctionnement de la partie émission E de cette station. La sécurité du système s'en trouve ainsi grandement améliorée.

De plus, cet accroissement de sécurité ne se fait pas par accroissement de la complexité du système mais, au contraire, s'accompagne d'une réduction du nombre de circuits nécessaire, à redondance donnée : en effet, les éléments F, M, $L_B$ et $S_Q$ sont désormais en un seul exemplaire dans la station centrale $S_c$ et non plus multipliés en autant d'exemplaires que de stations MLS $S_i$.

Une conséquence en est une augmentation de la fiabilité. On sait en effet que la fiabilité d'une chaîne de sous-ensembles est une fonction inverse du nombre de sous-ensembles constituant la chaîne. Plus précisément, si le taux de panne d'un sous-ensemble $i$ est $p_i$, la probabilité P de fonctionnement de la chaîne à l'instant t est :

$$P = e^{-pt} \text{ avec } p = \Sigma_i\, p_i$$

Pour une chaîne redondante, où les sous-ensembles sont doublés, on remplace $e^{-p_it}$ par $(2e^{-p_it} - e^{2p_it})$.

Par ailleurs, la sécurité du système ne dépend pas que du risque de recouvrement des émissions. Elle dépend également du risque de rayonner un signal erroné, donc dangereux. La probabilité $P_R$ de rayonner un tel signal est le produit

$$P_R = P_{em} \cdot P_{pc}$$

où :

- $P_{em}$ est la probabilité de panne de l'ensemble d'émission (en se limitant au cas d'un signal dangereux) ; elle est une fonction inverse de la fiabilité de l'ensemble d'émission ;
- $P_{pe}$ est la probabilité qu'une panne ne soit pas vue par l'ensemble de contrôle (panne cachée de l'ensemble de contrôle) ; elle est une fonction inverse de la fiabilité de l'ensemble de contrôle.

Il en résulte que la sécurité est une fonction du produit fiabilité de l'ensemble d'émission par fiabilité de l'ensemble de contrôle. Elle se trouve donc augmentée par l'amélioration de la fiabilité de l'ensemble d'émission.

Enfin, une autre conséquence de la réduction du nombre de circuits est bien entendu une réduction du coût du système.

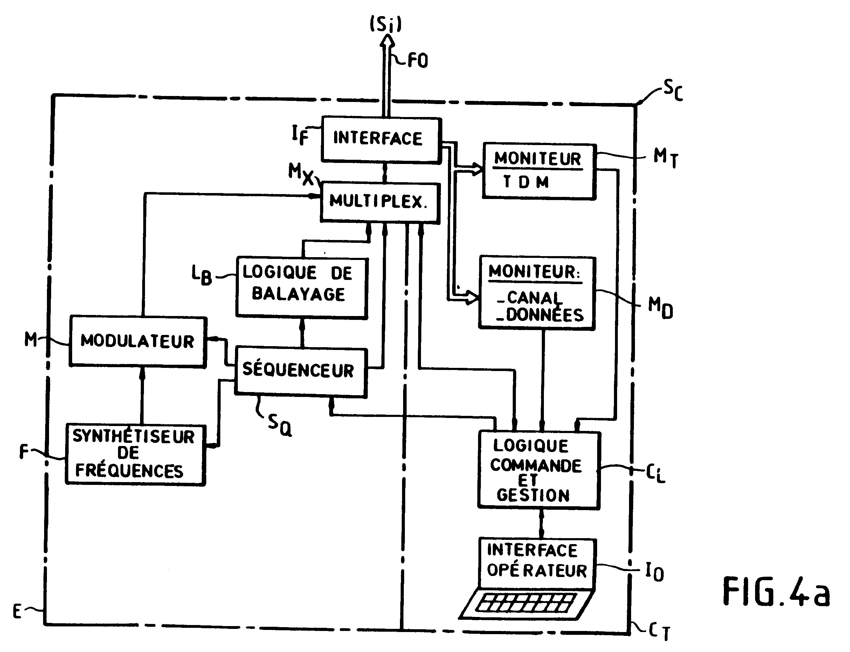

La figure 4a représente un deuxième mode de réalisation d'une station centrale d'émission selon l'invention.

Comme précédemment, la station centrale $S_c$ comporte une partie émission E et une partie contrôle $C_T$.

La partie émission E est identique à celle qui a été décrite figure 3a.

La partie contrôle $C_T$ comporte, comme décrit figure 3a, l'interface opérateur $I_o$ et les moyens logiques de commande et de gestion $C_L$, qui reçoivent les signaux fournis par le moniteur TDM $M_T$, mais également par le moniteur $M_D$, alimenté comme le moniteur $M_T$.

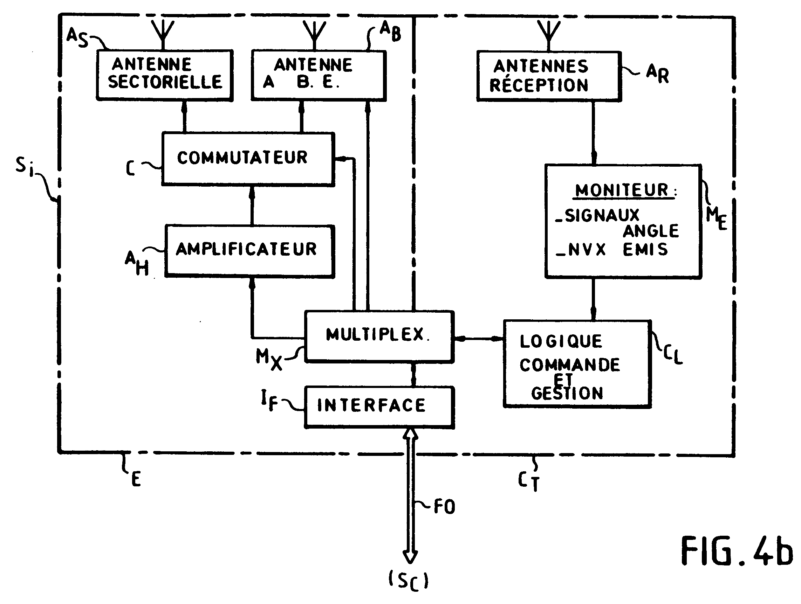

La figure 4b est le schéma d'une station MLS adaptée pour recevoir les signaux émis par une station centrale telle que décrite figure 4a.

Cette station $S_i$ comporte encore une partie émission E et une partie contrôle $C_T$.

La partie émission E est identique à ce qui a été décrit figure 3b.

La partie contrôle $C_T$ comporte toujours les antennes de réception $A_R$ et une logique de commande et de gestion $C_L$, mais ne comporte plus qu'un seul moniteur $M_E$, les deux autres étant maintenant disposés dans la station centrale $S_c$ (figure 4a).

Comme précédemment, les échanges avec la station centrale se font par l'intermédiaire des moyens $M_x$ et de l'interface de liaison optique $I_F$, tant pour la partie émission E que pour la partie contrôle $C_T$.

Ce deuxième mode de réalisation, qui intègre à la station centrale le moniteur $M_D$, chargé de vérifier la fréquence porteuse et les données, permet d'accentuer les effets précédemment décrits de réduction de matériel et d'accroissement de fiabilité.

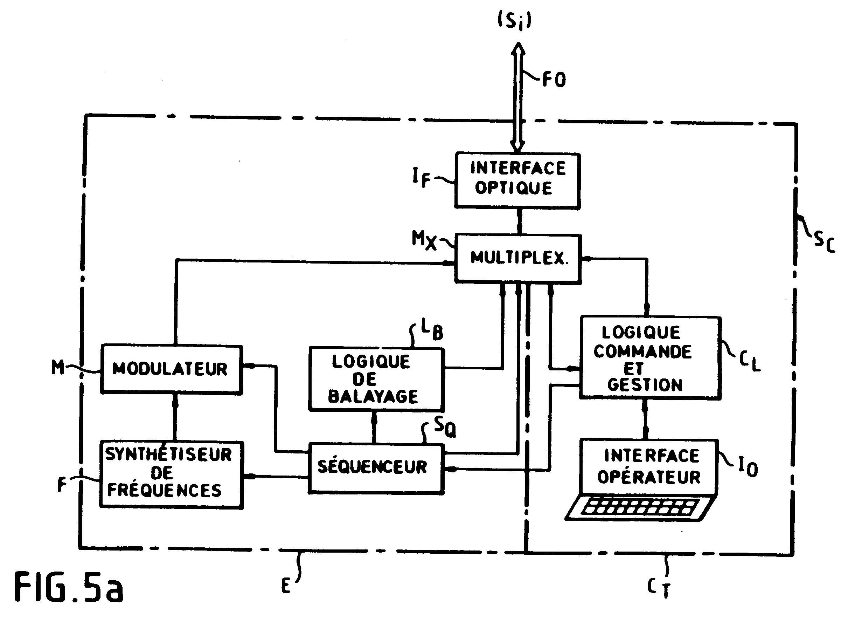

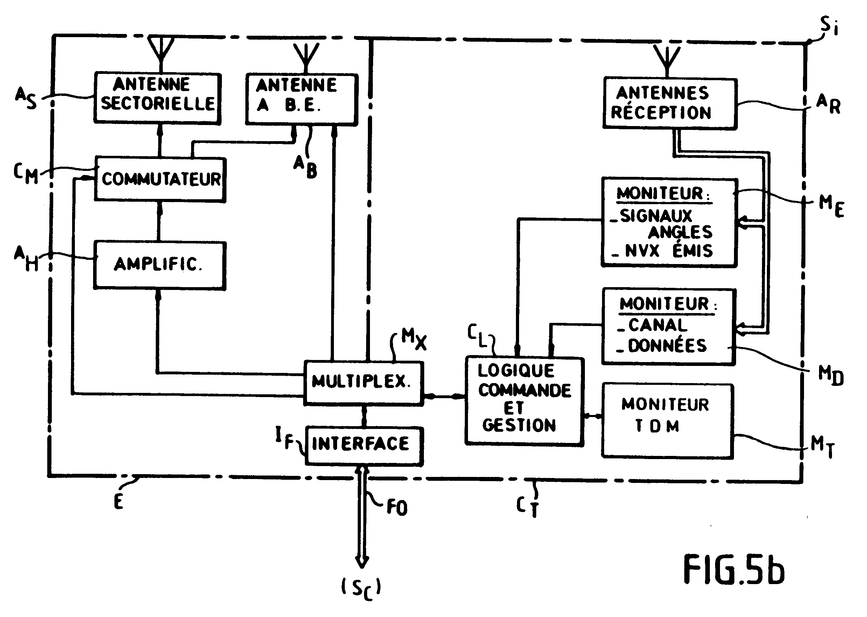

La figure 5a représente un troisième mode de réalisation d'une station centrale d'émission selon l'invention.

Comme précédemment, la station centrale $S_c$ comporte une partie émission E et une partie contrôle $C_T$.

La partie émission E est identique à celle qui a été décrite figure 3a.

La partie contrôle $C_T$ comporte ici, uniquement, l'interface opérateur $I_o$ et les moyens logiques de commande et de gestion $C_L$, qui reçoivent les signaux fournis par le réseau optique FO via l'interface $I_F$ et les moyens $M_x$.

La figure 5b est le schéma d'une station MLS adaptée pour recevoir les signaux émis par une station centrale telle que décrite figure 5a.

Cette station $S_i$ comporte encore une partie émission E et une partie contrôle $C_T$.

La partie émission E est identique à ce qui a été décrit figure 3b.

La partie contrôle $C_T$ comporte les mêmes éléments que ceux décrits figure 3b plus un moniteur TDM $M_T$, relié à la logique de commande $C_L$.

Comme précédemment, les échanges avec la station centrale se font par l'intermédiaire des moyens $M_x$ et de l'interface de liaison optique $I_F$, tant pour la partie émission E que pour la partie contrôle $C_T$.

Dans ce mode de réalisation, la station centrale ne comporte pas de moniteur TDM. Celui-ci n'est en effet pas indispensable : il a pour double fonction de vérifier que les émissions des stations ne se chevauchent pas, ce qui est réalisé par le principe même de l'invention, et que l'ordre d'émission des stations est conforme à la norme : cela peut être vérifié dans la station centrale (figure 3a) ou dans les stations $S_i$ (figure 5b) ou pas du tout, si les éléments concernés sont considérés comme suffisamment sécuritaires.

L'invention n'est bien entendu pas limitée aux modes de réalisation décrits ci-dessus. C'est ainsi notamment que la transmission des informations sur le réseau optique FO a été décrit via des moyens de multiplexage-démultiplexage, mais ceux-ci ne sont pas indispensables : ils peuvent être remplacés par exemple par une liaison optique constituée par une pluralité de fibres optiques, chaque fibre étant affectée à un type d'information.

## Revendications

1. Système d'aide à l'atterrissage du type MLS, consistant à émettre à destination d'un avion, en multiplexage temporel sur une même fréquence porteuse, des informations dites fonctions, comprenant successivement un préambule et soit des données, soit des informations angulaires, le système comportant au moins deux stations MLS ($S_i$) qui comportent chacune :
   - une antenne sectorielle ($A_S$), assurant l'émission des préambules et des données, sous forme de l'onde porteuse modulée en phase ;
   - une antenne à balayage électronique ($A_B$), assurant l'émission des informations angulaires, sous forme de balayages de l'onde à la fréquence porteuse ;
   - des moyens de contrôle ($C_T$) du fonctionnement de la station ;

   le système étant caractérisé par le fait qu'il comporte en outre une station centrale ($S_c$), comportant des moyens d'émission (E), reliée aux stations MLS ($S_i$) par au moins une fibre optique (FO) ;
   que les moyens d'émission (E) de la station centrale ($S_c$) comportent :
   - des moyens (F) de génération d'un signal à la fréquence porteuse ;
   - des moyens (M) de modulation du signal précédent par les préambules et les données ;

   la station centrale ($S_c$) comportant en outre des moyens d'interface ($I_F$) des moyens d'émission (E) avec la fibre optique (FO) ;
   et que les stations MLS ($S_i$) comportent chacune des moyens propres d'émission (E) et des moyens d'interface ($I_F$) de la fibre optique (FO) avec les moyens propres d'émission (E), ces derniers comportant :
   - des moyens d'amplification ($A_H$) des signaux reçus de la station centrale ($S_c$) ;
   - un commutateur ($C_M$) assurant la commutation des signaux amplifiés entre l'antenne sectorielle ($A_S$) et l'antenne à balayage électronique ($A_B$).

2. Système selon la revendication 1, caractérisé par le fait que la station centrale et les stations MLS comportent en outre des moyens de multiplexage-démultiplexage ($M_x$) reliés aux moyens d'interface ($I_F$).

3. Système selon l'une des revendications 1 ou 2, caractérisé par le fait que la station centrale ($S_c$) comporte en outre des moyens de contrôle ($C_T$) du fonctionnement du système, ces moyens de contrôle ($C_T$) comportant à leur tour :
   - des moyens de couplage fournissant un signal de contrôle représentant le signal émis sur la fibre optique par la station centrale ($S_c$) vers les stations MLS ($S_i$) ;
   - des moyens logiques ($C_L$) de commande et de gestion de la station centrale et des stations MLS.

4. Système selon la revendication 3, caractérisé par le fait que la station centrale ($S_c$) comporte en outre des moyens ($M_T$) reliés aux moyens de couplage et aux moyens logiques ($C_L$), assurant le contrôle du multiplexage temporel des fonctions MLS.

5. Système selon l'une des revendications 3 ou 4, caractérisé par le fait que la station centrale ($S_c$) comporte en outre des moyens ($M_D$) reliés aux moyens de couplage et aux moyens logiques ($C_L$), assurant le contrôle de la fréquence porteuse et des données.

6. Système selon l'une des revendications 1, 2 ou 3, caractérisé par le fait que les moyens de contrôle ($C_T$) de chacune des stations MLS ($S_i$) comportent :
   - des moyens capteurs ($A_R$) des signaux émis par la station ;
   - des moyens ($M_E$) assurant le contrôle des informations angulaires et du niveau des signaux émis, reliés à l'antenne de réception ;
   - des moyens logiques ($C_L$) de commande et de gestion de la station MLS, reliés aux moyens de contrôle ($M_E$) et aux moyens d'interface ($I_F$).

7. Système selon la revendication 6, caractérisé par le fait que les moyens de contrôle ($C_T$) de chacune des stations MLS ($S_i$) comportent en outre des moyens ($M_D$) assurant le contrôle de la fréquence porteuse et des données, reliés à l'antenne de réception ($A_R$) et aux moyens logiques ($C_L$).

8. Système selon la revendication 7, caractérisé par le fait que les moyens de contrôle ($C_T$) de chacune des stations MLS ($S_i$) comportent en outre des moyens ($M_T$) assurant le contrôle du multiplexage temporel des fonctions MLS, reliés aux moyens logiques ($C_L$) et aux moyens de couplage.

**Patentansprüche**

1. Landungshilfssystem vom Typ MLS, bei welchem zu einem Flugzeug im Zeitmultiplex auf einer gleichen Trägerfrequenz Informationen, sogenannte Funktionen, gesendet werden, die nacheinander einen Vorsatz und Daten oder Winkelinformationen enthalten, wobei das System wenigstens zwei MLS-Stationen ($S_i$) enthält, die jeweils enthalten:
   - eine Sektorantenne ($A_S$), die das Aussenden von Vorsätzen und von Daten in Form einer phasenmodulierten Trägerwelle ermöglicht;
   - eine Antenne ($A_B$) mit elektronischer Strahlschwenkung, die das Aussenden von Winkelinformationen in Form von Durchläufen der Welle mit der Trägerfrequenz ermöglicht;
   - Mittel ($C_T$) zum Kontrollieren der Arbeitsweise der Station;
   wobei das System gekennzeichnet ist durch die Tatsache, daß es ferner eine Zentralstation ($S_C$) mit Sendemitteln (E) aufweist, die an die MLS-Stationen ($S_i$) über wenigstens eine Lichtleitfaser (FO) angeschlossen sind,
   daß die Sendemittel (E) der Zentralstation ($S_C$) enthalten:
   - Mittel (F) zum Erzeugen eines Signals mit der Trägerfrequenz;
   - Mittel (M) zum Modulieren des vorgenannten Signals durch die Vorsätze und die Daten;
   wobei die Zentralstation ($S_C$) ferner Schnittstellenmittel ($I_F$) der Sendemittel (E) mit der Lichtleitfaser (FO) enthält;
   und daß die MLS-Stationen ($S_i$) jeweils eigene Sendemittel (E) und Schnittstellenmittel ($I_F$) der Lichtleitfaser (FO) mit den eigenen Sendemitteln (E) enthalten, wobei letztere enthalten:
   - Verstärkungsmittel ($A_H$) für die von der Zentralstation ($S_C$) empfangenen Signale;
   - einen Umschalter ($C_M$), der das Umschalten der verstärkten Signale zwischen der Sektorantenne ($A_S$) und der Antennen ($A_B$) mit elektronischer Strahlschwenkung ermöglicht.

2. System nach Anspruch 1, gekennzeichnet durch die Tatsache, daß die Zentralstation und die MLS-Stationen außerdem Multiplex-Demultiplex-Mittel ($M_x$) enthalten, die an die Schnittstellenmittel ($I_F$) angeschlossen sind.

3. System nach einem der Ansprüche 1 oder 2, gekennzeichnet durch die Tatsache, daß die Zentralstation ($S_C$) ferner Mittel ($C_T$) zum Kontrollieren der Arbeitsweise des Systems enthält, wobei diese Kontrollmittel (CT) ihrerseits enthalten:
- Kopplungsmittel, die ein Kontrollsignal liefern, das das über die Lichtleitfaser von der Zentralstation ($S_C$) zu den MLS-Stationen ($S_i$) gesendete Signal repräsentieren;
- Logikmittel ($C_L$) zum Steuern und Verwalten der Zentralstation und der MLS-Stationen.

4. System nach Anspruch 3, gekennzeichnet durch die Tatsache, daß die Zentralstation ($S_C$) ferner Mittel (MT) enthält, die an die Kopplungsmittel und an die Logikmittel ($C_L$) angeschlossen sind und die Kontrolle der zeitlichen Multiplexierung der MLS-Funktionen ermöglichen.

5. System nach einem der Ansprüche 3 oder 4, gekennzeichnet durch die Tatsache, daß die Zentralstation ($S_C$) ferner Mittel ($M_D$) enthält, die an die Kopplungsmittel und an die Logikmittel ($C_L$) angeschlossen sind und die Kontrolle der Trägerfrequenz und der Daten ermöglichen.

6. System nach einem der Ansprüche 1, 2 oder 3, gekennzeichnet durch die Tatsache, daß die Kontrollmittel ($C_T$) jeder MLS-Station ($S_i$) enthalten:
- Fühlermittel ($A_R$) für die von der Station ausgesendeten Signale;
- Mittel ($M_E$), die die Kontrolle der Winkelinformationen und des Pegels der ausgesendeten Signale ermöglichen und an die Empfangsantenne angeschlossen sind;
- an die Kontrollmittel ($M_E$) und die Schnittstellenmittel ($I_F$) angeschlossene Logikmittel ($C_L$) zum Steuern und Verwalten der MLS-Station.

7. System nach Anspruch 6, gekennzeichnet durch die Tatsache, daß die Kontrollmittel ($C_T$) jeder der MLS-Stationen ($S_i$) ferner Mittel ($M_D$) enthalten, die die Kontrolle der Trägerfrequenz und der Daten ermöglichen und an die Empfangsantenne ($A_R$) sowie an die Logikmittel ($C_L$) angeschlossen sind.

8. System nach Anspruch 7, gekennzeichnet durch die Tatsache, daß die Kontrollmittel ($C_T$) jeder MLS-Station ($S_i$) ferner Mittel ($M_T$) enthalten, die die Kontrolle der zeitlichen Multiplexierung der MLS-Funktionen ermöglichen und an die Logikmittel ($C_L$) sowie an die Kopplungsmittel angeschlossen sind.

**Claims**

1. Landing aid system of the MLS type, consisting of transmitting, towards an aircraft, in time-division multiplexing on the same carrier frequency, information known as functions, successively comprising a preamble and either data or angular information, the system including at least two MLS stations ($S_i$) which each include:
- a sector antenna ($A_S$), carrying out transmission of the preambles and of the data, in the form of the phase modulated carrier wave;
- an electronic-scanning antenna ($A_B$), carrying out transmission of the angular information, in the form of scans of the wave at the carrier frequency;
- means ($C_T$) for checking the operation of the station;

the system being characterized in that it further includes a central station ($S_c$), including transmission means (E), linked to the MLS stations ($S_i$) by at least one optical fibre (FO);

in that the transmission means (E) of the central station ($S_c$) include:
- means (F) for generating a signal at the carrier frequency;
- means (M) for modulating the preceding signal by the preambles and the data;

the central station ($S_c$) further including means ($I_F$) for an interface of the transmission means (E) with the optical fibre (FO);

and in that the MLS stations ($S_i$) each include their own transmission means (E) and means ($I_F$) for an interface of the optical fibre (FO) with their own transmission means (E), the latter including:
- means ($A_H$) for amplifying the signals received from the central station ($S_c$);
- a changeover switch ($C_M$) carrying out changeover switching of the amplified signals between the sector antenna ($A_S$) and the electronic-scanning antenna ($A_B$).

2. System according to Claim 1, characterized in that the central station and the MLS stations further include multiplexing-demultiplexing means ($M_x$) linked to the interface means ($I_F$).

3. System according to one of Claims 1 or 2, characterized in that the central station ($S_c$) further includes means ($C_T$) for checking the operation of the system, these checking means ($C_T$) in their turn including:
- coupling means supplying a checking signal representing the signal sent on the optical fibre by the central station ($S_c$) to the MLS stations ($S_i$);
- logic means ($C_L$) for control and management of the central station and of the MLS stations.

4. System according to Claim 3, characterized in that the central station ($S_c$) further includes means ($M_T$) linked to the coupling means and to the logic means ($C_L$), providing checking of the time-division multiplexing of the MLS functions.

5. System according to one of Claims 3 or 4, characterized in that the central station ($S_c$) further includes means ($M_D$) linked to the coupling means and to the logic means ($C_L$) carrying out checking of the carrier frequency and of the data.

6. System according to one of Claims 1, 2 or 3, characterized in that the checking means ($C_T$) of each of the MLS stations ($S_i$) include:
   - means ($A_R$) for sensing the signals transmitted by the station;
   - means ($M_E$) carrying out checking of the angular information and of the level of signals transmitted, linked to the receiving antenna;
   - logic means ($C_L$) for control and management of the MLS station, linked to the checking means ($M_E$) and to the interface means ($I_F$).

7. System according to Claim 6, characterized in that the checking means ($C_T$) of each of the MLS stations ($S_i$) further include means ($M_D$) carrying out checking of the carrier frequency and of the data, linked to the receiving antenna ($A_R$) and to the logic means ($C_L$).

8. System according to Claim 7, characterized in that the checking means ($C_T$) of each of the MLS stations ($S_i$) further include means ($M_T$) carrying out checking of the time-division multiplexing of the MLS functions, linked to the logic means ($C_L$) and to the coupling means.

FIG.1

EP 0 433 161 B1

FIG.2

FIG.3a

EP 0 433 161 B1

FIG.3b

EP 0 433 161 B1

FIG.4a

$(S_i)$

FO

$S_C$

$I_F$ INTERFACE

MONITEUR T D M — $M_T$

$M_X$ MULTIPLEX.

$L_B$ LOGIQUE DE BALAYAGE

MONITEUR: _CANAL _DONNÉES — $M_D$

M MODULATEUR

SÉQUENCEUR

$S_Q$

F SYNTHÉTISEUR DE FRÉQUENCES

LOGIQUE COMMANDE ET GESTION — $C_L$

INTERFACE OPÉRATEUR — $I_O$

E

$C_T$

EP 0 433 161 B1

FIG.4b

FIG.5a

EP 0 433 161 B1

FIG.5b